# FASCICULE DE BREVET EUROPEEN

(11) **EP 3 206 789 B1**
(45) Date de publication et mention de la délivrance du brevet: **20.02.2019**
(21) Numéro de dépôt: 15775205.6
(22) Date de dépôt: 06.10.2015
(51) Int. Cl.: B01J 37/03, B01J 37/34, B01J 35/00, B01J 23/08, B01J 23/62, B01J 23/66, C01B 3/22

(54) **COMPOSITION PHOTOCATALYTIQUE COMPRENANT DES PARTICULES METALLIQUES ET DEUX SEMI-CONDUCTEURS DONT UN EN OXYDE D'INDIUM**
PHOTOKATALYTISCHE ZUSAMMENSETZUNG MIT METALLISCHEN PARTIKELN UND ZWEI HALBLEITERN, WOBEI EINER DAVON AUS INDIUMOXID BESTEHT
PHOTOCATALYTIC COMPOSITION COMPRISING METALLIC PARTICLES AND TWO SEMICONDUCTORS, ONE OF WHICH IS COMPOSED OF INDIUM OXIDE

(30) Priorité: 14.10.2014 FR 1459849
(43) Date de publication de la demande: 23.08.2017
(73) Titulaire: IFP Energies nouvelles, 92500 Rueil-Malmaison (FR); Centre National de la Recherche Scientifique, 75794 Paris Cedex 16 (FR); Université Claude Bernard Lyon 1, 69100 Villeurbanne (FR)
(72) Inventeur: LOFFICIAL, Dina, F-69006 Lyon (FR); FECANT, Antoine, F-69530 Brignais (FR); UZIO, Denis, F-69230 Saint Genis Laval (FR); PUZENAT, Eric, F-69006 Lyon (FR); GEANTET, Christophe, F-1700 Miribel (FR)
(74) Mandataire: IFP Energies nouvelles
(86) Numéro de dépôt international: PCT/EP2015/072997
(87) Numéro de publication internationale: WO 2016/058863

(56) Documents cités:
- US-A1- 2006 210 636
- CHOPRA NITIN ET AL: "Fabrication and characterization of copper oxide (CuO)-gold (Au)-titania (TiO2) and copper oxide (CuO)-gold (Au)-indium tin oxide (ITO) nanowire", MATERIALS CHARACTERIZATION, ELSEVIER, NEW YORK, NY, US, vol. 96, 22 juillet 2014 (2014-07-22), pages 71-77, XP029054713, ISSN: 1044-5803, DOI: 10.1016/J.MATCHAR.2014.07.021
- HYUNSU KIM ET AL: "Enhanced Photoluminescence in Au-Embedded ITO Nanowires", ACS APPLIED MATERIALS & INTERFACES, vol. 3, no. 12, 28 décembre 2011 (2011-12-28), pages 4677-4681, XP055197957, ISSN: 1944-8244, DOI: 10.1021/am201098e
- SONG J K ET AL: "Gold-titania nanocomposite films with a periodic 3D nanostructure", THIN SOLID FILMS, ELSEVIER-SEQUOIA S.A. LAUSANNE, CH, vol. 517, no. 19, 3 août 2009 (2009-08-03) , pages 5705-5709, XP026158789, ISSN: 0040-6090, DOI: 10.1016/J.TSF.2009.02.128 [extrait le 2009-03-05]
- FENGYAN MA ET AL: "Fabrication of metallic platinum and indium oxide codoped titania nanotubes for the simulated sunlight photocatalytic degradation of diethyl phthalate", CATALYSIS COMMUNICATIONS, ELSEVIER SCIENCE, AMSTERDAM, NL, vol. 24, 23 mars 2012 (2012-03-23), pages 75-79, XP028483172, ISSN: 1566-7367, DOI: 10.1016/J.CATCOM.2012.03.030 [extrait le 2012-03-31]
- YU-CHIH CHEN ET AL: "Interfacial Charge Carrier Dynamics of the Three-Component In 2 O 3 -TiO 2 -Pt Heterojunction System", JOURNAL OF PHYSICAL CHEMISTRY C, vol. 116, no. 4, 2 février 2012 (2012-02-02), pages 2967-2975, XP055197960, ISSN: 1932-7447, DOI: 10.1021/jp210033y
- QINGGE ZHAI ET AL: "Photocatalytic Conversion of Carbon Dioxide with Water into Methane: Platinum and Copper(I) Oxide Co-catalysts with a Core-Shell Structure", ANGEWANDTE CHEMIE INTERNATIONAL EDITION, vol. 52, no. 22, 27 mai 2013 (2013-05-27), pages 5776-5779, XP055197637, ISSN: 1433-7851, DOI: 10.1002/anie.201301473
- ZHONGHUA LI ET AL: "CuO/Cu/TiOnanotube Ohmic heterojunction arrays with enhanced photocatalytic hydrogen production activity", INTERNATIONAL JOURNAL OF HYDROGEN ENERGY, ELSEVIER SCIENCE PUBLISHERS B.V., BARKING, GB, vol. 37, no. 8, 18 janvier 2012 (2012-01-18), pages 6431-6437, XP028477458, ISSN: 0360-3199, DOI: 10.1016/J.IJHYDENE.2012.01.075 [extrait le 2012-01-24]

## Description

Le domaine de l'invention est celui des matériaux composite et leur application en photocatalyse. Par matériau composite on entend un solide constitué d'au moins deux composés de natures chimiques différentes.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

### ART ANTERIEUR

Des exemples de matériaux composite contenant des semi-conducteurs, notamment des matériaux composite composés de particules de type coeur-couche en surface d'un support semi-conducteur existent dans la littérature. Ce type de solide a particulièrement été développé dans des applications en photocatalyse.

C. Li et al (J. Hydrogen Energy, 37, p. 6431-6437, 2012) ont dévoilé la synthèse de solides à base de nanotubes de TiO₂ sur lesquels sont déposées de manière photo-assistée des particules de cuivre métallique oxydées en leur surface.

H. Lin et al. (Catal. Comm., 21, p. 91-95, 2012) proposent un composite préparé par coprécipitation composé de AgBr/Ag/AgI, AgBr et AgI étant tous deux semi-conducteurs.

C. Wang et al. (Chem. Eng. J., 237, p.29-37, 2014) ont préparé par imprégnations successives un matériau comportant des contacts entre WO₃ et Pt d'une part et Pt et TiO₂ d'autre part.

Enfin, H. Tada (Nature Materials, 5, p. 782-786, 2006) propose un solide à base de particules hémisphériques présentant une couche de CdS autour d'un coeur d'Au, lesquelles particules sont déposées sur le semi-conducteur TiO₂.
L'objet de l'invention est de proposer une composition contenant un premier semi-conducteur SC1 choisi parmi le TiO₂, le Bi₂S₃, le Bi₂O₃, le Fe₂O₃, le ZnO, le WO₃, le CuO, le ZnFe₂O₄, le MoS₂, et l'In(OH)₃, des particules comportant un ou plusieurs élément(s) M à l'état métallique choisis parmi le platine, le palladium, l'or, le nickel, le cobalt, le ruthénium, l'argent, le cuivre, le rhénium ou le rhodium, et un deuxième semi-conducteur SC2 comportant de l'oxyde d'indium et ne contenant pas d'autre élément du groupe des métaux que l'indium, ledit premier semi-conducteur SC1 étant en contact direct avec lesdites particules comportant un ou plusieurs élément(s) M à l'état métallique, lesdites particules étant en contact direct avec ledit deuxième semi-conducteur SC2 comportant de l'oxyde d'indium de telle sorte que le deuxième semi-conducteur SC2 recouvre au moins 50 % de la surface des particules comportant un ou plusieurs élément(s) M à l'état métallique, le taux de recouvrement étant mesuré par spectrométrie photoélectronique au rayon X, et dans laquelle ledit premier semi-conducteur SC1 forme un support, ledit support contient à sa surface des particules de type coeur-couche, ladite couche étant formée par ledit semi-conducteur SC2 comportant de l'oxyde d'indium, ledit coeur étant formé par lesdites particules comportant un ou plusieurs élément(s) M à l'état métallique.

L'emploi d'oxyde d'indium constitutif du semi-conducteur SC2 permet de manière surprenante d'obtenir un photocatalyseur ayant des performances photocatalytiques améliorées par rapport aux photocatalyseurs connus de l'état de la technique.

Selon une variante, l'oxyde d'indium est majoritairement composé de In₂O₃.

Selon une variante, la teneur en oxyde d'indium du semi-conducteur SC2, exprimée en élément In, est comprise entre 0,01 et 50 % en poids par rapport au poids total de la composition.

Selon une variante, la teneur en élément(s) M à l'état métallique est comprise entre 0,001 et 20% en poids par rapport au poids total de la composition.

Selon une variante, lesdites particules comportant un ou plusieurs élément(s) M à l'état métallique se présentent sous la forme de particules de tailles comprises entre 0,5 nm et 1000 nm.

Selon une variante, la composition se présente sous forme de poudre nanométrique.

Selon une variante, la couche possède une épaisseur de 1 nm à 1000 nm.

L'invention porte également sur son procédé de préparation comprenant les étapes suivantes :
a) on prépare sous agitation une suspension contenant un premier semi-conducteur SC1 dans un mélange liquide composé d'eau et/ou d'un ou plusieurs composés organiques et au moins un précurseur métallique choisi parmi le platine, le palladium, l'or, le nickel, le cobalt, le ruthénium, l'argent, le cuivre, le rhénium ou le rhodium, et on irradie la suspension par une source d'irradiation telle qu'au moins une partie du spectre d'émission de ladite source soit composée de photons d'énergies supérieures à la largeur de bande interdite du semi-conducteur SC1,
b) on introduit sous agitation et sous irradiation de ladite source d'irradiation un précurseur d'indium au degré d'oxydation +3 soluble dans la suspension obtenue à l'étape a),
c) on introduit ensuite sous agitation et sous irradiation de ladite source d'irradiation un agent basique de manière à provoquer la précipitation de l'oxyde d'indium,
d) puis on sépare la composition de la suspension de l'étape c),
e) on sèche la composition obtenue à l'étape d),
f) éventuellement, on soumet la composition séchée obtenue à l'étape e) à un traitement thermique.

Selon une variante, à l'étape c) le pH est compris entre 5 et 13 après l'introduction de l'agent basique.

L'invention porte également sur l'utilisation de la composition selon l'invention comme photocatalyseur.

### DESCRIPTION DETAILLEE DE L'INVENTION

### Composition selon l'invention

L'invention concerne une composition contenant un premier semi-conducteur SC1 choisi parmi le TiO₂, le Bi₂S₃, le Bi₂O₃, le Fe₂O₃, le ZnO, le WO₃, le CuO, le ZnFe₂O₄, le MoS₂, et l'In(OH)₃, des particules comportant un ou plusieurs élément(s) M à l'état métallique choisis parmi le platine, le palladium, l'or, le nickel, le cobalt, le ruthénium, l'argent, le cuivre, le rhénium ou le rhodium, et un deuxième semi-conducteur SC2 comportant de l'oxyde d'indium et ne contenant pas d'autre élément du groupe des métaux que l'indium, ledit premier semi-conducteur SC1 étant en contact direct avec lesdites particules comportant un ou plusieurs élément(s) M à l'état métallique, lesdites particules étant en contact direct avec ledit deuxième semi-conducteur SC2 comportant de l'oxyde d'indium de telle sorte que le deuxième semi-conducteur SC2 recouvre au moins 50 % de la surface des particules comportant un ou plusieurs élément(s) M à l'état métallique, le taux de recouvrement étant mesuré par spectrométrie photoélectronique au rayon X, et dans laquelle ledit premier semi-conducteur SC1 forme un support, ledit support contient à sa surface des particules de type coeur-couche, ladite couche étant formée par ledit semi-conducteur SC2 comportant de l'oxyde d'indium, ledit coeur étant formé par lesdites particules comportant un ou plusieurs élément(s) M à l'état métallique.

La composition est constituée d'un premier semi-conducteur SC1 choisi parmi le TiO₂, le Bi₂S₃, le Bi₂O₃, le Fe₂O₃, le ZnO, le WO₃, le CuO, le ZnFe₂O₄, le MoS₂, et l'In(OH)₃, des particules comportant un ou plusieurs élément(s) M à l'état métallique choisis parmi le platine, le palladium, l'or, le nickel, le cobalt, le ruthénium, l'argent, le cuivre, le rhénium ou le rhodium, et un deuxième semi-conducteur SC2 comportant de l'oxyde d'indium et ne contenant pas d'autre élément du groupe des métaux que l'indium.

Selon un aspect important de l'invention, le premier semi-conducteur SC1 est en contact direct avec des particules comportant un ou plusieurs élément(s) M à l'état métallique, lesdites particules étant en contact direct avec un deuxième semi-conducteur SC2 comportant de l'oxyde d'indium.

L'emploi d'oxyde d'indium constitutif de la couche des particules de type coeur-couche en surface d'un support semi-conducteur SC1 selon l'invention permet de manière surprenante d'obtenir un photocatalyseur ayant des performances photocatalytiques améliorées par rapport aux photocatalyseurs connus de l'état de la technique ne contenant pas l'architecture de type coeur-couche supporté.
Le deuxième semi-conducteur SC2 recouvre au moins 50 % de la surface des particules comportant un ou plusieurs élément(s) M à l'état métallique une surface, de manière préférée supérieure à 60% et de manière très préférée supérieure à 75%. Le taux de recouvrement est mesuré par XPS (spectrométrie photoélectronique au rayon X ou X-ray photoelectron spectrometry selon la terminologie anglo-saxonne), par exemple sur un appareil ESCA KRATOS® Axis Ultra avec une source monochromatique Al à 1486.6 eV, et une énergie de passage de 40 eV, et exprime le recouvrement de la surface totale des particules comportant un ou plusieurs élément(s) M à l'état métallique.

La couche possède une épaisseur de 1 nm à 1000 nm, de préférence de 1 nm à 500 nm, et de manière particulièrement préférée de 2 à 50 nm.

La composition contient un premier semi-conducteur SC1. Les semi-conducteurs SC1 utilisés selon l'invention comprennent au moins un semi-conducteur inorganique. La largeur de bande interdite du semi-conducteur inorganique-est généralement entre 0,1 et 5,5 eV.

Le semi-conducteur est choisi parmi le TiO₂, le Bi₂S₃, le Bi₂O₃, le Fe₂O₃, le ZnO, le WO₃, le CuO, le ZnFe₂O₄, le MoS₂, et l'In(OH)₃

Le semi-conducteur SC1 peut éventuellement être dopé avec un ou plusieurs ions choisis parmi des ions métalliques, tels que par exemple des ions de V, Ni, Cr, Mo, Fe, Sn, Mn, Co, Re, Nb, Sb, La, Ce, Ta, Ti, des ions non-métalliques, tels que par exemple C, N, S, F, P, ou par un mélange d'ions métalliques et non-métalliques.

Selon une autre variante, le semi-conducteur SC1 peut-être sensibilisé en surface avec toutes molécules organiques susceptibles d'absorber des photons.

Le semi-conducteur SC1 peut se présenter sous différentes formes (poudre nanométrique, nanoobjets comportant ou non des cavités,...) ou mises en formes (films, monolithe, billes de taille micrométrique ou millimétrique, ...).

La composition contient un deuxième semi-conducteur SC2. Le semi-conducteur SC2 comporte de l'oxyde d'indium. De préférence, l'élément indium est au degré d'oxydation +3. De manière très préférée, l'oxyde d'indium est majoritairement composé de In₂O₃. On entend par « majoritairement composé de In₂O₃ » une teneur en In₂O₃ supérieure à 50 % poids, de préférence supérieure à 60 % poids et de manière particulièrement préférée supérieure à 70 % du poids total du semi-conducteur SC2. Eventuellement, le semi-conducteur SC2 peut en outre contenir des hydroxydes d'indium. Le semi-conducteur SC2 ne contient pas d'autre élément du groupe des métaux que l'indium.

La teneur en oxyde d'indium, exprimée en élément In, est comprise entre 0,01 et 50 % en poids, de préférence comprise entre 0,5 et 20% en poids par rapport au poids total de la composition.

La composition comporte des particules comportant un ou plusieurs élément(s) M à l'état métallique choisis parmi le platine, le palladium, l'or, le nickel, le cobalt, le ruthénium, l'argent, le cuivre, le rhénium ou le rhodium. Lesdites particules comportant un ou plusieurs élément(s) M sont en contact direct avec ledit semi-conducteur SC1 et SC2 respectivement. Lesdites particules peuvent être composées d'un seul élément à l'état métallique ou de plusieurs éléments à l'état métallique pouvant formés un alliage.

On entend par « élément à l'état métallique » un élément appartenant à la famille des métaux, ledit élément étant au degré d'oxydation zéro (et donc sous forme de métal).

Lesdites particules comportant un ou plusieurs élément(s) M à l'état métallique se présentent préférentiellement sous la forme de particules de tailles comprises entre 0,5 nm et 1000 nm, de manière très préférée entre 0,5 nm et 100 nm.

La teneur en élément(s) M à l'état métallique est comprise entre 0,001 et 20% en poids, de manière préférée comprise entre 0,01 et 10% en poids par rapport au poids total de la composition.

La composition selon l'invention peut se présenter sous différentes formes (poudre nanométrique, nanoobjets comportant ou non des cavités,...) ou mises en formes (films, monolithe, billes de taille micrométrique ou millimétrique, ...). La composition selon l'invention se présente avantageusement sous forme de poudre nanométrique.

### Préparation du solide

La composition selon l'invention peut être préparée selon toute méthode connue de l'homme du métier. Selon un mode de réalisation, la composition est obtenue par photodéposition du ou des éléments métalliques M formant les particules métalliques (et donc le coeur dans une architecture coeur-couche supporté), puis par condensation induite par précipitation sous irradiation d'un précurseur d'indium de degré d'oxydation +3 (formant la couche dans une architecture coeur-couche supporté) sur un semi-conducteur SC1 (formant le support dans une architecture coeur-couche supporté) contenant les particules métalliques à sa surface.

Il convient de noter qu'une préparation par la technique d'imprégnation à sec (recherchant généralement une haute dispersion du métal sur le support) d'un précurseur de cuivre ne permet pas d'obtenir une composition selon l'invention dans laquelle le deuxième semi-conducteur SC2 comportant de l'oxyde de cuivre recouvre au moins 50 % de la surface des particules comportant un ou plusieurs élément(s) M à l'état métallique.

Plus particulièrement, le procédé de préparation de la composition selon l'invention comprend les étapes suivantes :
a) on prépare sous agitation une suspension contenant un premier semi-conducteur SC1 dans un mélange liquide composé d'eau et/ou d'un ou plusieurs composés organiques et au moins un précurseur métallique choisi parmi le platine, le palladium, l'or, le nickel, le cobalt, le ruthénium, l'argent, le cuivre, le rhénium ou le rhodium, et on irradie la suspension par une source d'irradiation telle qu'au moins une partie du spectre d'émission de ladite source soit composée de photons d'énergies supérieures à la largeur de bande interdite du semi-conducteur SC1,
b) on introduit sous agitation et sous irradiation de ladite source d'irradiation un précurseur d'indium au degré d'oxydation +3 soluble dans la suspension obtenue à l'étape a),
c) on introduit ensuite sous agitation et sous irradiation de ladite source d'irradiation un agent basique de manière à provoquer la précipitation de l'oxyde d'indium,
d) puis on sépare la composition de la suspension de l'étape c),
e) on sèche la composition obtenue à l'étape d),
f) éventuellement, on soumet la composition séchée obtenue à l'étape e) à un traitement thermique.

Ainsi, dans l'étape a), on prépare sous agitation une suspension contenant un semi-conducteur SC1, de préférence sous forme de poudre nanométrique, dans un mélange liquide composé d'eau et/ou d'un ou plusieurs composés organiques et au moins un précurseur métallique choisi parmi le platine, le palladium, l'or, le nickel, le cobalt, le ruthénium, l'argent, le cuivre, le rhénium ou le rhodium, et on irradie la suspension par une source d'irradiation telle qu'au moins une partie du spectre d'émission de ladite source est composée de photons d'énergies supérieures à la largeur de bande interdite du semi-conducteur SC1.

Le pourcentage de composés organiques contenus dans la suspension varie de 0 à 100% en volume. Les composés organiques sont généralement des alcools primaires ou secondaires, de manière préférée, les composés organiques sont le méthanol, l'éthanol ou l'isopropanol, seuls ou en mélange.

Le précurseur métallique est introduit dans le mélange sous forme de poudre soluble ou en solution, de préférence en solution aqueuse. Le précurseur métallique est généralement à base d'acétate, d'acétylacétonate, de chlorure, de nitrate ou de sulfate. De manière préférée, le précurseur métallique est à base de chlorure ou de nitrate.

Le précurseur est un précurseur de platine, de palladium, d'or, de nickel, de cobalt, de ruthénium, d'argent, de cuivre, de rhénium ou de rhodium.

Les quantités du précurseur métallique introduites dans la suspension sont choisies de telle manière que la teneur en élément(s) M à l'état métallique soit comprise entre 0,001 et 20% en poids, de manière préférée comprise entre 0,01 et 10% en poids par rapport au poids total de la composition.

Le semi-conducteur SC1 introduit dans l'étape a) est un des semi-conducteurs décrits auparavant.

Le mélange est effectué de préférence à température ambiante sous agitation, de préférence mécanique ou par bullage.

Le mélange est irradié par une source telle qu'au moins une partie du spectre d'émission est composée de photons d'énergies supérieures à la largeur de bande interdite du semi-conducteur employé. De préférence la source émet à au moins une gamme de longueur d'onde supérieure à 280 nm, de manière très préférée de 315 nm à 800 nm, ce qui inclut le spectre UV et/ou le spectre visible. La source de rayonnement peut être toute source de rayonnement électromagnétique artificielle ou naturelle, telle que la lumière naturelle du soleil, une lampe de type Hg, une lampe de type Xe, une lampe de type LED.

La durée de cette étape est de préférence comprise entre 1 minute et 20 heures sous irradiation, de préférence comprise entre 1 minute et 5 heures.

Durant l'étape a), les ions métalliques M^{δ+} du précurseur sont réduits sous forme de particules métalliques M° en surface du semi-conducteur SC1 sous l'action des électrons générés par l'absorption de photons par ledit semi-conducteur. Lorsque la composition est sous forme d'une architecture de type coeur-couche supporté, ces particules métalliques formeront le coeur de la composition selon l'invention.

Dans l'étape b), on introduit sous agitation et sous irradiation de ladite source d'irradiation un précurseur d'indium au degré d'oxydation +3 soluble dans la suspension obtenue à l'étape a).

Le précurseur d'indium est généralement à base de chlorure, iodure, bromure, fluorure, acétate, acétylacétonate, nitrate, sulfate, hydroxyde. De manière préférée, le précurseur est le nitrate d'indium ou le chlorure d'indium.

Le précurseur d'indium peut être solubilisé avant son introduction dans de l'eau ou un mélange liquide composé d'eau et d'un ou plusieurs composés organiques tels que des alcools primaires ou secondaires, et de manière préférée, le méthanol, l'éthanol ou l'isopropanol, seul ou en mélange.

Eventuellement, et afin de s'assurer de la solubilité du précurseur d'indium, un agent acide peut être ajouté au mélange afin de moduler le pH de la solution. L'agent acide est sélectionné de préférence parmi les acides inorganiques tels que l'acide nitrique, sulfurique, phosphorique, chlorhydrique, bromhydrique ou les acides organiques tels que des acides carboxyliques ou sulfoniques. Le pH de la solution est inférieur à 7, de préférence inférieur à 5.

Les quantités du précurseur d'indium introduites dans la suspension sont choisies de telle manière que la teneur en oxyde d'indium, exprimée en élément In, soit comprise entre 0,01 et 50 % en poids, de préférence comprise entre 0,5 et 20% en poids par rapport au poids total de la composition.

Les conditions d'agitation et d'irradiation sont celles décrites pour l'étape a), Les conditions d'agitation et d'irradiation sont de préférence identiques à celles de l'étape a). La durée de cette étape est de préférence comprise entre 1 minute et 20 heures, de préférence comprise entre 1 minute et 5 heures.

Dans l'étape c), on introduit sous agitation et sous irradiation de ladite source d'irradiation un agent basique de manière à provoquer la précipitation de l'oxyde d'indium, notamment d'In₂O₃. De préférence, le pH est modifié par l'ajout d'un agent basique d'une telle manière qu'il est dans une gamme entre 5 et 13 après l'ajout de l'agent.

L'agent basique est sélectionné de préférence parmi les hydroxydes d'alcalins ou d'alcalinoterreux, les bases organiques telles que des amines ou de l'ammoniaque.

Les conditions d'agitation et d'irradiation de l'étape c) sont celles décrites pour l'étape a). Les conditions d'agitation et d'irradiation sont de préférence identiques à celles de l'étape a). La durée de cette étape est de préférence comprise entre 1 minute et 20 heures, de préférence comprise entre 1 minute et 5 heures.

Durant l'étape c), les ions métalliques In³⁺ précipitent sous forme d'une couche d'oxyde métallique In₂O₃ en surface des particules métalliques M déposées à l'étape a), sous l'action de l'agent basique introduit. L'interface M/Semi-conducteur SC1 favorise la localisation des électrons photogénérés par l'absorption de photon dans ledit semi-conducteur SC1 en surface des particules métalliques M et induit ainsi une charge partielle négative en surface desdites particules métalliques M, d'où la localisation préférentielle de la couche d'oxyde In₂O₃ sur les particules métalliques en raison de l'attraction électrostatique entre In³⁺ et M^{(δ-)}.

Dans l'étape d), on sépare la composition de la suspension de l'étape c). La séparation peut être effectuée par filtration ou par centrifugation. De préférence elle est effectuée par centrifugation. Généralement, cette centrifugation s'effectue pendant 10 à 60 minutes de 2000 à 10000 tours par minute. De manière préférée, un à trois lavages à l'eau sont ensuite effectués.

Dans l'étape e), on sèche la composition obtenue à l'étape d). Le séchage est effectué entre 30°C et 200°C, généralement pendant 1 à 48 heures, de préférence sous air. Eventuellement, ce séchage peut être réalisé sous atmosphère inerte. Le séchage peut être éventuellement effectué dans une étuve ou un évaporateur rotatif. L'étape de séchage peut éventuellement se faire sous vide partiel.

Selon un mode de réalisation, on peut effectuer entre les étapes a) et b) une étape de séparation, de préférence par centrifugation, une étape optionnelle de lavage, et une étape de séchage dans les conditions décrites ci-dessus.

De manière éventuelle, la composition séchée obtenue à l'étape e) est soumis à un traitement thermique (étape f). Le traitement thermique est effectué sous flux d'air, d'azote, d'hydrogène ou sous vide partiel, généralement à une température entre 50°C et 500°C, de préférence pendant une durée entre 1 et 16 heures.

### Utilisation en photocatalvse

L'invention porte également sur l'utilisation de la composition selon l'invention comme photocatalyseur, et notamment comme photocatalyseur pour la dégradation de composés organiques, tel que par exemple l'acide formique.

Le procédé photocatalytique de dégradation de composés organiques, tel que par exemple la dégradation photocatalytique de l'acide formique, est mis en oeuvre en mettant en contact un flux contenant un composé organique avec ladite composition selon l'invention. Puis la composition est irradiée par au moins une source d'irradiation produisant au moins une longueur d'onde adaptée à l'activation de ladite composition de manière à dégrader le composé organique, par exemple l'acide formique en hydrogène et en CO₂.

La composition peut être utilisée dans un procédé photocatalytique en milieu liquide ou gazeux. La mise en oeuvre du procédé photocatalytique peut se faire en lit fixe traversé, en lit fixe léchant ou en suspension (aussi appelé "slurry" selon la terminologie anglo-saxonne). Il peut également se faire dans des réacteurs totalement en verre ou disposant de fenêtres optiques non absorbantes afin de permettre au rayonnement d'atteindre la surface du solide. Le type de technologie de réacteur pour la mise en oeuvre du solide est généralement adapté à une suspension. Ce type de technologie est aussi appelé "slurry" selon la terminologie anglo-saxonne. Le type de technologie de réacteur peut encore être de type panneau solaire avec lit léchant ou traversant sur support poreux ou non poreux. Le photocatalyseur peut également être déposé directement sur des fibres optiques.

Toute source d'irradiation émettant au moins une longueur d'onde adaptée à l'activation de ladite composition c'est-à-dire absorbable par la composition peut être utilisée selon l'invention. L'irradiation de la source est donc telle qu'au moins une partie du spectre d'émission de ladite source soit composée de photons d'énergies supérieures à la largeur de bande interdite de la composition selon l'invention. De préférence, la source émet à au moins une gamme de longueur d'onde supérieure à 280 nm, de manière très préférée de 315 nm à 800 nm, ce qui inclut le spectre UV et/ou le spectre visible. La source de rayonnement peut être toute source de rayonnement électromagnétique artificielle ou naturelle, telle que la lumière naturelle du soleil, une lampe de type Hg, une lampe de type Xe, une lampe de type LED.

L'utilisation de la composition est conditionnée par la fourniture de photons adaptés au système photocatalytique pour la réaction envisagée et de ce fait n'est pas limitée à une gamme de pression ou de température spécifique en dehors de celles permettant d'assurer la stabilité du ou des produit(s). La gamme de température employée pour l'utilisation de la composition est généralement de -10°C à + 200°C, de manière préférée de 0 à 150°C, et de manière très préférée de 0 et 50°C. La gamme de pression employée pour l'utilisation de la composition est généralement de 0,01 MPa à 70 MPa (0,1 à 700 bar), de manière préférée de 0,1 MPa à 2 MPa (1 à 20 bar).

L'invention est illustrée par les exemples suivants qui ne présentent, en aucun cas, un caractère limitatif.

### EXEMPLES

### Exemple 1 : Solide A (conforme à l'invention) In₂O₃/Pt/TiO₂

0,0712 g de H₂PtCl₆,6H₂O (37,5% en masse de métal) est inséré dans 500 ml d'eau distillée. 50 ml de cette solution sont prélevés et insérés dans un réacteur double enveloppe en verre. 3 ml de méthanol puis 250 mg de TiO₂ (P25, Degussa™) sont alors ajoutés sous agitation pour former une suspension.

Le mélange est alors laissé sous agitation et sous rayonnement UV pendant deux heures. La lampe utilisée pour fournir le rayonnement UV est une lampe HPK™ à vapeur de mercure de 125W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide A' Pt/TiO₂. La teneur en élément Pt est mesurée par spectrométrie d'émission atomique à source plasma (ou inductively coupled plasma atomic émission spectroscopy "ICP-AES" selon la terminologie anglo-saxonne) à 0,93 % en masse.

Une solution d'In(NO₃)₃ est préparée en dissolvant 0,05 g d'In(NO₃)₃, xH₂O (Sigma-Aldrich™, 99,9%) dans 50 ml d'H₂O.

Dans le réacteur, ont été introduits : 0,10 g du solide A', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min et l'irradiation du mélange réactionnel démarre. La lampe utilisée pour fournir le rayonnement UV est une lampe HPK™ à vapeur de mercure de 125 W. Puis, 5 ml de la solution de nitrate d'indium sont ajoutés au mélange. Le mélange est laissé 1 heure sous agitation et irradiation. On ajoute ensuite 1 ml d'une solution de NH₃ à 30%. Le mélange est à nouveau laissé 1 heure sous agitation et irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide A In₂O₃/Pt/TiO₂. La teneur en élément In est mesurée par ICP-AES à 1,9 % en masse. Par mesure XPS (X-Ray Photoelectron Spectrometry selon la terminologie anglo-saxonne), on mesure un recouvrement des particules de platine supérieur à 79%. Par microscopie électronique à transmission, on mesure une épaisseur de couche moyenne d'oxyde d'indium de 5 nm autour des particules métalliques.

### Exemple 2 : Solide B (conforme à l'invention) In₂O₃/Pt/TiO₂

0,0710 g de H₂PtCl₆,6H₂O (37,5% en masse de métal) est inséré dans 500 ml d'eau distillée. 50 ml de cette solution sont prélevés et insérés dans un réacteur double enveloppe en verre. 3 ml de méthanol puis 250 mg de TiO₂ (P25, Degussa™) sont alors ajoutés sous agitation pour former une suspension.

Le mélange est alors laissé sous agitation et sous rayonnement UV pendant deux heures. La lampe utilisée pour fournir le rayonnement UV est une lampe HPK™ à vapeur de mercure de 125W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide B' Pt/TiO₂. La teneur en élément Pt est mesurée par ICP-AES à 0,92 % en masse.

Une solution d'In(NO₃)₃ est préparée en dissolvant 0,05 g d'In(NO₃)₃, xH₂O (Sigma-Aldrich™, 99,9%) dans 50 ml d'H₂O.

Dans le réacteur, ont été introduits : 0,10 g du solide B', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min et l'irradiation du mélange réactionnel démarre. La lampe utilisée pour fournir le rayonnement UV est une lampe HPK™ à vapeur de mercure de 125 W. Puis, 10 ml de la solution de nitrate d'indium sont ajoutés au mélange. Le mélange est laissé 1 heure sous agitation et irradiation. On ajoute ensuite 1 ml d'une solution de NH₃ à 30%. Le mélange est à nouveau laissé 1 heure sous agitation et irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide B In₂O₃/Pt/TiO₂. La teneur en élément In est mesurée par ICP-AES à 3,7 % en masse. Par mesure XPS, on mesure un recouvrement des particules de platine supérieur à 89%. Par microscopie électronique à transmission, on mesure une épaisseur de couche moyenne d'oxyde d'indium de 10 nm autour des particules métalliques.

### Exemple 3 : Solide C (conforme à l'invention) In₂O₃/Pt/ZnO

0,0710 g de H₂PtCl₆,6H₂O (37,5% en masse de métal) est inséré dans 500 ml d'eau distillée. 50 ml de cette solution sont prélevés et insérés dans un réacteur double enveloppe en verre. 3 ml de méthanol puis 250 mg de ZnO (Lotus Synthesis™, surface spécifique 50 m²/g) sont alors ajoutés sous agitation pour former une suspension.

Le mélange est alors laissé sous agitation et sous rayonnement UV pendant deux heures. La lampe utilisée pour fournir le rayonnement UV est une lampe HPK™ à vapeur de mercure de 125W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide C' Pt/ZnO. La teneur en élément Pt est mesurée par ICP-AES à 0,80 % en masse.

Une solution d'In(NO₃)₃ est préparée en dissolvant 0,05 g d'In(NO₃)₃, xH₂O (Sigma-Aldrich™, 99,9%) dans 50 ml d'H₂O.

Dans le réacteur, ont été introduits : 0,10 g du solide C', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min et l'irradiation du mélange réactionnel démarre. La lampe utilisée pour fournir le rayonnement UV est une lampe HPK™ à vapeur de mercure de 125 W. Puis, 10 ml de la solution de nitrate d'indium sont ajoutés au mélange. Le mélange est laissé 1 heure sous agitation et irradiation. On ajoute ensuite 1 ml d'une solution de NH₃ à 30%. Le mélange est à nouveau laissé 1 heure sous agitation et irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide C In₂O₃/Pt/ZnO. La teneur en élément In est mesurée par ICP-AES à 3,9 % en masse. Par mesure XPS, on mesure un recouvrement des particules de platine supérieur à 92%. Par microscopie électronique à transmission, on mesure une épaisseur de couche moyenne d'oxyde d'indium de 12 nm autour des particules métalliques.

### Exemple 4 : Solide D (conforme à l'invention) In₂O₃/Au/TiO₂

0,0470 g de HAuCl₄,xH₂O (52% en masse de métal, Aldrich™) est inséré dans 500 mL d'eau distillée. 50 mL de cette solution sont prélevés et insérés dans un réacteur double enveloppe en verre. 3 mL de méthanol puis 250 mg de TiO₂ (P25, Degussa™) sont alors ajoutés sous agitation pour former une suspension.

Le mélange est alors laissé sous agitation et sous rayonnement UV pendant deux heures. La lampe utilisée pour fournir le rayonnement UV est une lampe HPK™ à vapeur de mercure de 125W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors un solide D' Au/TiO₂. La teneur en élément Au est mesurée par ICP-AES à 0,95 % en masse.

Une solution d'In(NO₃)₃ est préparée en dissolvant 0,05 g d'In(NO₃)₃, xH₂O (Sigma-Aldrich™, 99,9%) dans 50 ml d'H₂O.

Dans le réacteur, ont été introduits : 0,10 g du solide D', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min et l'irradiation du mélange réactionnel démarre. La lampe utilisée pour fournir le rayonnement UV est une lampe HPK™ à vapeur de mercure de 125 W. Puis, 10 ml de la solution de nitrate d'indium sont ajoutés au mélange. Le mélange est laissé 1 heure sous agitation et irradiation. On ajoute ensuite 1 ml d'une solution de NH₃ à 30%. Le mélange est à nouveau laissé 1 heure sous agitation et irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide D In₂O₃/Au/TiO₂. La teneur en élément In est mesurée par ICP-AES à 3,8 % en masse. Par mesure XPS, on mesure un recouvrement des particules d'or supérieur à 86%. Par microscopie électronique à transmission, on mesure une épaisseur de couche moyenne d'oxyde d'indium de 11 nm autour des particules métalliques.

### Exemple 5 : Solide E (non-conforme à l'invention) In₂O₃/Pt/TiO₂

0,0710 g de H₂PtCl₆,6H₂O (37,5% en masse de métal, Aldrich™) est inséré dans 500 ml d'eau distillée. 50 ml de cette solution sont prélevés et insérés dans un réacteur double enveloppe en verre. 3 ml de méthanol puis 250 mg de TiO₂ (P25, Degussa™) sont alors ajoutés sous agitation pour former une suspension.

Le mélange est alors laissé sous agitation et sous rayonnement UV pendant deux heures. La lampe utilisée pour fournir le rayonnement UV est une lampe HPK™ à vapeur de mercure de 125 W.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors un solide E' Pt/TiO₂. La teneur en élément Pt est mesurée par ICP-AES à 0,94 % en masse.

Une solution d'In(NO₃)₃ est préparée en dissolvant 0,05 g d'In(NO₃)₃, xH₂O (Sigma-Aldrich™, 99,9%) dans 50 ml d'H₂O.

Dans le réacteur, ont été introduits : 0,10 g du solide E', 25 ml d'eau distillée et enfin 25 ml d'isopropanol. Le système est purgé à l'obscurité sous un flux d'argon (100 ml/min) durant 2h. Le réacteur est thermostaté à 25°C tout au long de la synthèse.

Le flux d'argon est ensuite ralenti à 30 ml/min. Puis, 10 ml de la solution de nitrate d'indium sont ajoutés au mélange. Le mélange est laissé 1 heure sous agitation et sans irradiation. On ajoute ensuite 1 ml d'une solution de NH₃ à 30%. Le mélange est à nouveau laissé 1 heure sous agitation et sans irradiation.

Le mélange est ensuite centrifugé pendant 10 minutes à 3000 tours par minute afin de récupérer le solide. Deux lavages à l'eau sont ensuite effectués, chacun des lavages étant suivi d'une centrifugation. La poudre récupérée est enfin placée dans une étuve à 70°C pendant 24 heures.

On obtient alors le solide E In₂O₃/Pt/TiO₂. La teneur en élément In est mesurée par ICP-AES à 3,6 % en masse. Par mesure XPS, on mesure un recouvrement des particules de platine de l'ordre de 16%. Par microscopie électronique à transmission, on distingue parfois une couche d'oxyde d'indium autour des particules métalliques sans parvenir à mesurer une épaisseur moyenne en raison de l'inhomogénéité de la répartition.

### Exemple 6 : Solide F (non conforme à l'invention) TiO₂

Le solide F est du dioxyde de titane commercial TiO₂ P25, Degussa™.

### Exemple 7 : Évaluation des solides en dégradation photocatalytique d'acide formique

Les solides A, B ,C ,D, E et F sont soumis à un test photocatalytique de production de dihydrogène par dégradation d'acide formique dans un réacteur semi-ouvert agité en pyrex muni d'une fenêtre optique en quartz et d'une double enveloppe pour réguler la température de test.

100 mg de solides sont mis en suspension dans 60mL d'une solution aqueuse d'acide formique à 0,5 mol/L. Les tests sont réalisés à 25°C sous pression atmosphérique avec un débit d'argon de 5 ml/min pour entrainer le gaz dihydrogène produit lequel est analysé par chromatographie en phase gazeuse. La source d'irradiation UV-Visible est fournie par une lampe Xe-Hg (Asahi™, MAX302™). La puissance d'irradiation est toujours maintenue à 100%. La durée du test est de 20 heures.
Les activités photocatalytiques sont exprimées en µmol de dihydrogène produit par heure et par gramme de photocatalyseur. Les résultats sont reportés dans le tableau 1. Les valeurs d'activité montrent que les solides selon l'invention présentent systématiquement les meilleures performances photocatalytiques.

**Tableau 1 : Performances des solides en activité initiale pour la production de dihydrogène par dégradation d'acide formique**

| Photocatalyseur SC2/M/SC1 | | Activité initiale (µmol/h/g) |
|---|---|---|
| Solide A (conforme) | In₂O₃/Pt/TiO₂ | 1141 |
| Solide B (conforme) | In₂O₃/Pt/TiO₂ | 1345 |
| Solide C (conforme) | In₂O₃/Pt/ZnO | 905 |
| Solide D (conforme) | In₂O₃/Au/TiO₂ | 1023 |
| Solide E (non-conforme) | In₂O₃/Pt/TiO₂ | 172 |
| Solide F (non-conforme) | TiO₂ | 12 |

## Revendications

1. Composition contenant un premier semi-conducteur SC1 choisi parmi le TiO₂, le Bi₂S₃, le Bi₂O₃, le Fe₂O₃, le ZnO, le WO₃, le CuO, le ZnFe₂O₄, le MoS₂, et l'In(OH)₃, des particules comportant un ou plusieurs élément(s) M à l'état métallique choisis parmi le platine, le palladium, l'or, le nickel, le cobalt, le ruthénium, l'argent, le cuivre, le rhénium ou le rhodium, et un deuxième semi-conducteur SC2 comportant de l'oxyde d'indium et ne contenant pas d'autre élément du groupe des métaux que l'indium, ledit premier semi-conducteur SC1 étant en contact direct avec lesdites particules comportant un ou plusieurs élément(s) M à l'état métallique, lesdites particules étant en contact direct avec ledit deuxième semi-conducteur SC2 comportant de l'oxyde d'indium de telle sorte que le deuxième semi-conducteur SC2 recouvre au moins 50 % de la surface des particules comportant un ou plusieurs élément(s) M à l'état métallique, le taux de recouvrement étant mesuré par spectrométrie photoélectronique au rayon X, et dans laquelle ledit premier semi-conducteur SC1 forme un support, ledit support contient à sa surface des particules de type coeur-couche, ladite couche étant formée par ledit semi-conducteur SC2 comportant de l'oxyde d'indium, ledit coeur étant formé par lesdites particules comportant un ou plusieurs élément(s) M à l'état métallique.

2. Composition selon la revendication 1, dans laquelle l'oxyde d'indium est majoritairement composé de In₂O₃.

3. Composition selon l'une des revendications 1 à 2, dans laquelle la teneur en oxyde d'indium du semi-conducteur SC2, exprimée en élément In, est comprise entre 0,01 et 50 % en poids par rapport au poids total de la composition.

4. Composition selon l'une des revendications 1 à 3, dans laquelle la teneur en élément(s) M à l'état métallique est comprise entre 0,001 et 20% en poids par rapport au poids total de la composition.

5. Composition selon l'une des revendications 1 à 4, dans laquelle lesdites particules comportant un ou plusieurs élément(s) M à l'état métallique se présentent sous la forme de particules de tailles comprises entre 0,5 nm et 1000 nm.

6. Composition selon l'une des revendications 1 à 5, laquelle se présente sous forme de poudre nanométrique.

7. Composition selon l'une des revendications 1 à 6, dans laquelle la couche possède une épaisseur de 1 nm à 1000 nm.

8. Procédé de préparation de la composition selon les revendications 1 à 7 comprenant les étapes suivantes :
a) on prépare sous agitation une suspension contenant le premier semi-conducteur SC1 dans un mélange liquide composé d'eau et/ou d'un ou plusieurs composés organiques et au moins un précurseur métallique choisi parmi le platine, le palladium, l'or, le nickel, le cobalt, le ruthénium, l'argent, le cuivre, le rhénium ou le rhodium, et on irradie la suspension par une source d'irradiation telle qu'au moins une partie du spectre d'émission de ladite source soit composée de photons d'énergies supérieures à la largeur de bande interdite du semi-conducteur SC1,
b) on introduit sous agitation et sous irradiation de ladite source d'irradiation un précurseur d'indium au degré d'oxydation +3 soluble dans la suspension obtenue à l'étape a),
c) on introduit ensuite sous agitation et sous irradiation de ladite source d'irradiation un agent basique de manière à provoquer la précipitation de l'oxyde d'indium,
d) puis on sépare la composition de la suspension de l'étape c),
e) on sèche la composition obtenue à l'étape d),
f) éventuellement, on soumet la composition séchée obtenue à l'étape e) à un traitement thermique.

9. Procédé de préparation selon la revendication 8, dans lequel à l'étape c) le pH est compris entre 5 et 13 après l'introduction de l'agent basique.

10. Utilisation de la composition selon les revendications 1 à 7 comme photocatalyseur.

## Patentansprüche

1. Zusammensetzung, umfassend einen ersten Halbleiter SC1, der unter TiO₂, Bi₂S₃, Bi₂O₃, Fe₂O₃, ZnO, WO₃, CuO, ZnFe₂O₄, MoS₂ und In(OH)₃ ausgewählt ist, Partikel, umfassend ein oder mehrere Element(e) M im metallischen Zustand, ausgewählt unter Platin, Palladium, Gold, Nickel, Kobalt, Ruthenium, Silber, Kupfer, Rhenium oder Rhodium, und einen zweiten Halbleiter SC2, umfassend Indiumoxid und umfassend kein weiteres Element der Gruppe der Metalle als Indium, wobei der erste Halbleiter SC1 in direktem Kontakt mit den Partikeln, umfassend ein oder mehrere Element(e) M im metallischen Zustand, ist, wobei die Partikel in direktem Kontakt mit dem zweiten Halbleiter SC2, umfassend Indiumoxid, sind, so dass der zweite Halbleiter SC2 mindestens 50 % der Oberfläche der Partikel, umfassend ein oder mehrere Element(e) M im metallischen Zustand, abdeckt, wobei die Abdeckungsrate durch Röntgen-Photoelektronenspektroskopie gemessen wird, und bei der der erste Halbleiter SC1 einen Träger bildet, wobei der Träger an seiner Oberfläche Partikel vom Typ Kernschicht enthält, wobei die Schicht von dem Halbleiter SC2, umfassend Indiumoxid, gebildet ist, wobei der Kern von den Partikeln, umfassend ein oder mehrere Element(e) M im metallischen Zustand, gebildet ist.

2. Zusammensetzung nach Anspruch 1, bei der das Indiumoxid mehrheitlich aus In₂O₃ besteht.

3. Zusammensetzung nach einem der Ansprüche 1 bis 2, bei der der Gehalt an Indiumoxid des Halbleiters SC2, ausgedrückt in Element In, zwischen 0,01 und 50 Gew.-% bezogen auf das Gesamtgewicht der Zusammensetzung beträgt.

4. Zusammensetzung nach einem der Ansprüche 1 bis 3, bei der der Gehalt an Element(en) M im metallischen Zustand zwischen 0,001 und 20 Gew.-% bezogen auf das Gesamtgewicht der Zusammensetzung beträgt.

5. Zusammensetzung nach einem der Ansprüche 1 bis 4, bei der die Partikel, die ein oder mehrere Element(e) M im metallischen Zustand umfassen, in Form von Partikeln mit Größen zwischen 0,5 nm und 1000 nm vorhanden sind.

6. Zusammensetzung nach einem der Ansprüche 1 bis 5, die in Form eines nanometrischen Pulvers vorhanden ist.

7. Zusammensetzung nach einem der Ansprüche 1 bis 6, bei der die Schicht eine Dicke von 1 nm bis 1000 nm besitzt.

8. Verfahren zur Herstellung der Zusammensetzung nach den Ansprüchen 1 bis 7, umfassend die folgenden Schritte:
a) unter Rühren Herstellen einer Suspension, die den ersten Halbleiter SC1 in einem flüssigen Gemisch, bestehend aus Wasser und/oder einer oder mehreren organischen Verbindungen und mindestens einer metallischen Vorstufe, ausgewählt unter Platin, Palladium, Gold, Nickel, Kobalt, Ruthenium, Silber, Kupfer, Rhenium oder Rhodium, enthält, und Bestrahlen der Suspension mit einer Strahlungsquelle, so dass mindestens ein Teil des Emissionsspektrums der Quelle aus Photonen mit höheren Energien als die verbotene Bandbreite des Halbleiters SC1 besteht,
b) unter Rühren und unter Bestrahlen mit der Strahlungsquelle Einleiten einer Indiumvorstufe mit dem Oxydationsgrad +3, die in der in Schritt a) erhaltenen Suspension löslich ist,
c) sodann unter Rühren und Bestrahlen mit der Strahlungsquelle Einleiten eines basischen Wirkstoffes, um die Ausfällung des Indiumoxids hervorzurufen,
d) dann Trennen der Zusammensetzung von der in Schritt c) erhaltenen Suspension,
e) Trocknen der in Schritt d) erhaltenen Zusammensetzung,
f) eventuell Unterziehen der in Schritt e) erhaltenen getrockneten Zusammensetzung einer Wärmebehandlung.

9. Herstellungsverfahren nach Anspruch 8, bei dem in Schritt c) der pH-Wert zwischen 5 und 13 nach dem Einleiten des basischen Wirkstoffes beträgt.

10. Verwendung der Zusammensetzung nach den Ansprüchen 1 bis 7 als Photokatalysator.

## Claims

1. Composition that contains a first semiconductor SC1 selected from among TiO₂, Bi₂S₃, Bi₂O₃, Fe₂O₃, ZnO, WO₃, CuO, ZnFe₂O₄, MoS₂, and In(OH)₃, particles comprising one or more element(s) M in the metal state that are selected from among a precursor of platinum, palladium, gold, nickel, cobalt, ruthenium, silver, copper, rhenium, or rhodium, and a second semiconductor SC2 that comprises indium oxide and does not contain an element of the group of metals other than indium, with said first semiconductor SC1 being in direct contact with said particles that comprise one or more element(s) M in the metal state, with said particles being in direct contact with said second semiconductor SC2 that comprises indium oxide in such a way that the second semiconductor SC2 covers at least 50% of the surfaces of the particles that comprise one or more element(s) M in the metal state, the covering rate is measured by X-ray photoelectron spectrometry, and in which said first semiconductor SC1 forms a substrate, said substrate contains on its surface core-shell-type particles, with said shell being formed by said semiconductor SC2 that comprises indium oxide, said core being formed by said particles that comprise one or more element(s) M in the metal state.

2. Composition according to one of Claims 1 to 3, in which the indium oxide for the most part consists of In₂O₃.

3. Composition according to one of Claims 1 to 2, in which the indium oxide content of the semiconductor SC2, expressed in terms of the element In, is between 0.01 and 50% by weight in relation to the total weight of the composition.

4. Composition according to one of Claims 1 to 3, in which the content of the element(s) M in the metal state is between 0.001 and 20% by weight in relation to the total weight of the composition.

5. Composition according to one of Claims 1 to 4, in which said particles that comprise one or more element(s) M in the metal state come in the form of particles of sizes of between 0.5 nm and 1000 nm.

6. Composition according to one of Claims 1 to 5, which comes in the form of nanometric powder.

7. Composition according to one of Claims 1 to 6, in which the shell as a thickness of 1 nm to 1000 nm.

8. Method for preparation of the composition according to Claims 1 to 7 comprising the following steps:
a) A suspension that contains a first semiconductor SC1 in a liquid mixture that consists of water and/or one or more organic compounds and at least one metal precursor that is selected from among a precursor of platinum, palladium, gold, nickel, cobalt, ruthenium, silver, copper, rhenium, or rhodium is prepared while being stirred, and the suspension is irradiated by an irradiation source such that at least a portion of the emission spectrum of said source consists of photons having energies that exceed the width of the forbidden band of the semiconductor SC1,
b) then under stirring and irradiation of said irradiation source, a soluble indium precursor with a degree of oxidation of +3 is introduced into the suspension that is obtained in step a),
c) Then, under stirring and irradiation of said irradiation source , a basic agent is introduced in such a way as to bring about the precipitation of indium oxide,
d) Then, the composition is separated from the suspension of step c),
e) The composition that is obtained in step d) is dried,
f) Optionally, the dried composition that is obtained in step e) is subjected to a heat treatment.

9. Preparation method according to one of Claim 8, in which in step c), the pH is between 5 and 13 after the basic agent is introduced.

10. Use of the composition according to Claims 1 to 7 as a photocatalyst.
